Europäisches Patentamt

European Patent Office

Office européen des brevets

(11) Veröffentlichungsnummer: **0 044 517**
**B1**

(12) # EUROPÄISCHE PATENTSCHRIFT

(45) Veröffentlichungstag der Patentschrift:
**11.09.85**

(51) Int. Cl.⁴: **F 16 K 1/44**

(21) Anmeldenummer: **81105538.3**

(22) Anmeldetag: **15.07.81**

(54) **Verfahren zur gleichzeitigen Reinigung beider Sitzflächen eines wenigstens einseitig produktbeaufschlagten Doppelsitzventils und Vorrichtung zur Durchführung des Verfahrens.**

(30) Priorität: **22.07.80 DE 3027647**
**07.03.81 DE 3108778**

(43) Veröffentlichungstag der Anmeldung:
**27.01.82 Patentblatt 82/4**

(45) Bekanntmachung des Hinweises auf die Patenterteilung:
**11.09.85 Patentblatt 85/37**

(84) Benannte Vertragsstaaten:
**AT BE CH DE FR GB IT LI LU NL SE**

(56) Entgegenhaltungen:
**DE - A - 2 456 675**
**DE - A - 2 523 202**
**DE - B - 2 632 587**

(73) Patentinhaber: **OTTO TUCHENHAGEN GmbH & Co. KG,**
**Berliner Strasse 10 Postfach 1140, D-2059 Büchen (DE)**

(72) Erfinder: **Mieth, Hans Otto, Dipl.-Ing., Rehblöcken 34,**
**D-2000 Hamburg 67 (DE)**

(74) Vertreter: **Dr. E. Wiegand Dipl.-Ing. W. Niemann Dr. M.**
**Kohler Dipl.-Ing. J. Glaeser Dr. H.-R. Kressin**
**Patentanwälte, Königstrasse 28,**
**D-2000 Hamburg 50 (DE)**

## Beschreibung

Die Erfindung betrifft ein Verfahren zur gleichzeitigen Reinigung beider Sitzflächen eines wenigstens einseitig produktbeaufschlagten Doppelsitzventils, insbesondere bei dessen Einsatz in der Nahrungsmittelindustrie, mit einem an sich bekannten, zum Zwecke der Reinigung mit einem Reinigungs- und/oder Desinfektionsmittel beaufschlagten Doppelsitzventil, welches mit zwei voneinander unabhängigen, relativ zueinander bewegbaren Schließgliedern ausgestattet ist, die mittels Betätigungseinrichtungen aus der Schließ- in eine Offenstellung bewegbar sind und von denen wenigstens ein produktbeaufschlagtes Schließglied schieberartig ausgebildet und innerhalb einer zwei Ventil-Gehäuseteile miteinander verbindenden Zylinderbohrung gleitend und radial dichtend verschiebbar ist, und wobei die Schließglieder sowohl in der Schließ- als auch in der Offenstellung einen Leckage-Hohlraum zwischen sich einschließen, der über eine Bohrung innerhalb der aus dem Ventilgehäuse nach unten herausgeführten Ventilstange des unteren Schließgliedes mit der Atmosphäre verbunden ist.

In den bekannten Doppelsitzventilen, bei denen prinzipiell die Reinigung der Sitzflächen des unteren Schließgliedes (vgl. DE-A-2 456 675) oder die Reinigung beider Sitzflächen zu verschiedenen Zeiten (vergleiche deutsches Gebrauchsmuster 8 003 805) möglich ist, ist eine Reinigung der Sitzfläche des produktbeaufschlagten Schließgliedes im Zuge der Reinigung der Sitzfläche des anderen Schließgliedes nicht möglich. Dieser Betriebsfall ist beispielsweise immer bei Behälter-Absperrventilen gegeben, wenn diese als Doppelsitzventile ausgebildet sind. Das behälterseitige Ventil-Gehäuseteil mit seinem Schließglied ist permanent produktbeaufschlagt, während das andere Ventil-Gehäuseteil als Teil einer Rohrleitung in mehr oder weniger regelmäßigen Zeitabständen im Durchfluß gereinigt wird, wobei bei den eingangs genannten bekannten Doppelsitzventilen das die in Reinigung befindliche Rohrleitung absperrende Schließglied über eine vom Hauptantrieb unabhängige Betätigungseinrichtung einen Teilhub erfährt, so daß wenigstens die mit diesem Schließglied korrespondierende Sitzfläche gereinigt wird. Das Reinigungsmittel gelangt dabei über den Spalt zwischen Sitzfläche und Schließglied in den Leckage-Hohlraum zwischen den Schließgliedern, um von dort über eine Bohrung innerhalb der aus dem Ventilgehäuse nach unten herausgeführten Ventilstange des unteren Schließgliedes in die Atmosphäre abzufließen.

Aus der DE-A-2 523 202 ist weiterhin ein Doppelsitzventil mit Leckkontroll-Öffnung bekannt, das zwei voneinander unabhängige, relativ zueinander bewegbare Schließglieder aufweist, wobei das oben liegende Schließglied schieberartig ausgebildet ist und innerhalb einer Zylinderbohrung zwischen Zuflußgehäuseteil und Abflußgehäuseteil gleitend und in seiner oberen Ruhelage durch eine Arretiervorrichtung fixiert ist. Bei diesem Doppelsitzventil schließen die Schließglieder sowohl in ihrer Schließ- als auch in ihrer Offenstellung einen Leckagehohlraum zwischen sich ein, der über eine Bohrung innerhalb der aus dem Ventilgehäuse nach unten herausgeführten Ventilstange des unteren Schließgliedes mit der Atmosphäre verbunden ist.

Das bekannte Doppelsitzventil ist nicht reinigbar. Aber selbst wenn es mit an sich bekannten Vorkehrungen zur Reinigung seines Leckage-Hohlraumes versehen würde, wäre beispielsweise eine Reinigung der Sitzfläche des schieberartig ausgebildeten, produktbeaufschlagten Schließgliedes im Zuge der Reinigung der Sitzfläche des anderen Schließgliedes nicht möglich.

Ausgehend vom letztgenannten Stand der Technik ist es Aufgabe der vorliegenden Erfindung, die gleichzeitige Reinigung beider Sitzflächen eines wenigstens einseitig produktbeaufschlagten Doppelsitzventils, wie es im Oberbegriff des Hauptanspruchs gekennzeichnet ist, zu ermöglichen.

Diese Aufgabe wird gemäß Anspruch 1 dadurch gelöst, daß das produktbeaufschlagte, schieberartig ausgebildete Schließglied zur Reinigung und/oder Desinfektion seines Sitzes um einen Teilhub in Richtung des produktführenden Ventil-Gehäuseteils innerhalb der Zylinderbohrung verschoben wird, daß gleichzeitig das andere Schließglied gegenüber dem produktbeaufschlagten um einen gleich- oder gegensinnigen Teilhub verschoben wird, und daß das Reinigungs- und/oder Desinfektionsmittel über das nicht produktführende Ventil-Gehäuseteil und/oder von außerhalb des Doppelsitzventils über den Leckage-Hohlraum an die beiden durch die Teilhübe der Schließglieder freigelegten Sitzflächen herangeführt wird.

Durch die schieberartige Ausbildung des produktbeaufschlagten Schließgliedes ist es möglich, dieses um einen Teilhub in Richtung des produktführenden Ventil-Gehäuseteils innerhalb der Zylinderbohrung zu verschieben, ohne daß seine abdichtende Funktion beeinträchtigt wird. Die im Hinblick auf das andere Schließglied alternativ vorgeschlagenen Maßnahmen zur Erzielung eines Teilhubes für dieses Schließglied ermöglichen eine gleichzeitige Reinigung beider Sitzflächen, wobei das Reinigungsmittel entweder über den Leckage-Hohlraum von außerhalb des Doppelsitzventils oder über den durch den Teilhub erzeugten Spalt aus dem nicht produktführenden Ventil-Gehäuseteil herangeführt werden kann.

Der Reinigungsvorgang kann insbesondere im produktbeaufschlagten Sitzbereich durch mehrmals sich wiederholende Teilhubbewegungen intensiviert werden.

Darüber hinaus ist es Aufgabe der Erfindung, bei einer Vorrichtung zur Durchführung des erfindungsgemäßen Verfahrens das schieberartig ausgebildete Schließglied gegen ungewollte Verschiebung infolge Produkt- oder Reinigungsmitteldruck zu sichern, die Schließglieder sowohl in der Schließstellung als auch in der Offenstellung des Doppelsitzventils gegeneinander zu verriegeln, bei der Sitzflächenreinigung des Doppelsitzventils in jeder Phase der Teilhubbewegung einen konstanten Sicherheitsabstand zwischen den Schließgliedern zwecks Abführung des Reinigungsmittels zu gewährleisten, eine Reinigung des Ringspalts zwischen Hohlstange und Ventilstange sowohl in der Schließ- als auch in der Offenstellung des Doppelsitzventils zu ermöglichen und die Schließlage beider Schließglieder des Doppelsitzventils durch eine einzige Einrichtung zu erfassen und zu melden.

Diese Aufgabe wird gemäß Anspruch 6 dadurch gelöst, daß

a) die Ventilstangen beider Schließglieder in eine Richtung weisen, teleskopartig ineinanderfassen und

b) auf der Seite des schieberartig ausgebildeten Schließgliedes aus dem Ventilgehäuse herausgeführt sind,

c) die innenliegende Ventilstange mit dem Sitzteller und mit der Betätigungseinrichtung verbunden ist,

d) die Ventilstangen im Bereich ihrer gegenseitigen Überdeckung mittels steuerbarer Verbindungsmittel, deren Position über eine Positions-Meldeeinrichtung überwacht werden kann, form- oder form- und kraftschlüssig miteinander koppelbar sind und

e) der Hub der innenliegenden Ventilstange in Verbindung mit dem Sitzteller mittels steuerbarer Vorkehrungen auf einen Teilhub begrenzt und die Schließlage des schieberartig ausgebildeten Schließgliedes durch einen Anschlag bestimmt werden kann.

Durch die erfindungsgemäße Ausgestaltung einer Vorrichtung zur Durchführung des Verfahrens wird unter anderem auch erreicht, daß das Doppelsitzventil zur Realisierung der gestellten Aufgaben nur mit einem einfachen Standardantrieb, dessen Arbeitskolben lediglich einseitig mit Druckmittel beaufschlagt wird, auszurüsten ist. Dadurch wird ein Beitrag geleistet, die notwendigen Standardbauteile eines Doppelsitzventils soweit wie möglich zu vereinfachen.

Die Vorrichtung zur Durchführung des Verfahrens ermöglicht zum einen die Sitzreinigung des Doppelsitzventils mittels Reinigungsmittel, welche über das dem Sitzteller benachbarte Ventilgehäuse an die freigelegten Sitzflächen herangeführt wird und zum anderen durch Herausführen sowohl einer hohlen Ventilstange als auch der innenliegenden Ventilstange aus dem eigentlichen Ventilgehäuse die Reinigung des Lekkage-Hohlraumes und des Ringspaltes zwischen der hohlen Ventilstange und der innenliegenden Ventilstange mittels Reinigungsmittel, welches von außerhalb des Ventils über den Ringspalt zugeführt wird.

Die Sicherung des schieberartig ausgebildeten Schließgliedes gegen Verschiebung infolge Produkt- oder Reinigungsmitteldruck wird sowohl in der Schließ- als auch in der Reinigungsstellung des Doppelsitzventils durch die steuerbaren Verbindungsmittel erreicht.

Darüber hinaus gewährleistet die Vorrichtung zur Durchführung des Verfahrens in jeder Phase der Teilhubbewegung während der Sitzreinigung einen konstanten Sicherheitsabstand zwischen den Schließgliedern des Doppelsitzventils, welcher dem Abstand der beiden Schließglieder in ihrer jeweiligen Schließlage entspricht.

Durch die Überwachung eines einzigen Bauteils, nämlich der Verbindungsmittel, ist es möglich, festzustellen, ob die beiden Schließglieder in ihre Schließlage zurückgekehrt sind. Dadurch wird es beispielsweise möglich, die Sitzreinigung des Doppelsitzventils immer erst dann zu starten, wenn die beiden Schließglieder zuvor ihre genau definierbare Schließstellung eingenommen haben.

Um einen unzulässigen Druckaufbau des Reinigungsmittels im Leckage-Hohlraum während der Sitzreinigung zu verhindern, ist nach einer weiteren Ausbildung der Vorrichtung zur Durchführung des Verfahrens ein wirksamer Zuflußspalt zwischen dem Sitzteller und seiner Sitzfläche mit einem höheren Druckverlust behaftet als ein zwischen dem Sitzteller und dem schieberartig ausgebildeten Schließglied wirksamer Abflußspalt.

Durch eine andere Ausgestaltung der Vorrichtung zur Durchführung des Verfahrens, welche vorsieht, daß ein kreisringförmiger Drosselspalt zwischen dem Sitzteller und der Zylinderbohrung einen höheren Druckverlust besitzt als der Zuflußspalt zwischen dem Sitzteller und seiner Sitzfläche, wird die Schaltleckage des Sitztellers nach Verlassen seiner Sitzfläche begrenzt. Darüber hinaus wird durch die düsenförmige Ausgestaltung eines Austritts des Drosselspaltes sichergestellt, daß die durch den Teilhub der Schließglieder auf der Zylinderbohrung freigelegte Sitzfläche des schieberartig ausgebildeten Schließgliedes gezielt mit Reinigungs- und/oder Desinfektionsmittel besült werden kann.

Durch Ausgestaltung der Vorrichtung zur Durchführung des Verfahrens gemäß Anspruch 9 wird erreicht, daß neben den Vorteilen, die die Ausgestaltung nach dem Anspruch 6 mit sich bringt, mindestens zwei weitere Vorteile erzielt werden. Zum einen werden steuerbare Verbindungsmittel und Vorkehrungen, welche hier in einfachster Weise als Kugeln ausgebildet sind, durch ein einziges Bauelement, nämlich einen Steuerkolben, betätigt, zum anderen sind die beiden Schließglieder auch in der Offenstellung des Doppelsitzventils gegeneinander verriegelt.

Nach einer weiteren Ausgestaltung der Vorrichtung zur Durchführung des Verfahrens wird eine Reinigung des Leckage-Hohlraumes zusätzlich dadurch erreicht, daß das Reinigungsmittel von außerhalb des Doppelsitzventils über einen Reinigungsmittel-Anschluß, Durchtrittsöffnungen im Hohlstangenkopf und einen Ringspalt zwischen der hohlen Ventilstange und der innenliegenden Ventilstange in den Leckage-Hohlraum eingeleitet wird.

Eine andere vorteilhafte Weiterbildung der Vorrichtung zur Durchführung des Verfahrens sieht vor, die Schließlage beider Schließglieder des Doppelsitzventils durch eine einzige die Lage eines Bauteils erfassende Einrichtung zu melden.

Eine andere Weiterbildung der Vorrichtung zur Durchführung des Verfahrens sieht vor, die Schließlage beider Schließglieder des Doppelsitzventils mittelbar über ein bewegliches Bauelement zu melden, wobei die die ordnungsgemäße Schließstellung des Doppelsitzventils signalisierende Lage des beweglichen Bauelementes eindeutig durch die der Schließstellung entsprechende Lage sowohl der hohlen Ventilstange als auch der innenliegenden Ventilstange bestimmt wird. Der Vorteil dieser allgemeinen Anweisung wird deutlich, wenn, wie dies eine weitere Ausgestaltung vorsieht, als bewegliches Bauelement der Steuerkolben vorgesehen ist, der in seiner der ordnungsgemäßen Schließstellung des Doppelsitzventils entsprechenden Ruhelage mittels eines Steuerkolbenmantels eine Positions-Meldeeinrichtung ansteuert. Der Vorteil, die jeweilige Schließstellung der Schließglieder mittelbar über den Steuerkolben zu melden, ergibt sich der mittelbar über den Steuerkolben zu melden, ergibt sich zum einen dadurch, daß dieser für die Positions-Meldeeinrichtung relativ einfach zugänglich ist und zum anderen dadurch, daß der Steuerkolben seine Ruhelage nur dann einnehmen kann, wenn sich beide Schließglieder in ihrer Schließstellung befinden.

Eine weitere Ausgestaltung der Vorrichtung zur Durchführung des Verfahrens sieht vor, sämtliche zur Realisierung der Verbindungsmittel, der Positions-Meldeeinrichtung und der Vorkehrungen notwendigen Bauteile in einem standardisierten Verbindungsgehäuse zusammengefaßt unterzubringen. Da das Verbindungsgehäuse auch bei allen anderen Doppelsitzventilen, die über keine Vorrichtung zur Sitzreinigung verfügen, ein notwendiges Verbindungselement zwischen Ventilgehäuse und Betätigungseinrichtung ist, führen die zur Sitzreinigung notwendigen konstruktiven Maßnahmen zu keiner Vergrößerung der Bauabmessungen des Doppelsitzventils.

Ausführungsbeispiele der Erfindung sind in der Zeichnung dargestellt und werden im folgenden näher beschrieben. Es zeigen

Fig. 1 bis 5a schematisch dargestellte Vorrichtungen zur Durchführung des erfindungsgemäßen Verfahrens,

Fig. 6 einen Längsschnitt durch ein Doppelsitzventil mit einer gemäß der Erfindung ausgestalteten Vorrichtung zur Durchführung des Verfahrens,

Fig. 7 einen Längsschnitt durch eine vorteilhafte Ausführungsform des Doppelsitzventils im Bereich des Verbindungsgehäuses (Schließstellung),

Fig. 7a einen durch den Schnittverlauf A-B in Fig. 7 gekennzeichneten Querschnitt durch die vorgenannte Ausführungsform gemäß der Erfindung,

Fig. 8 einen Längsschnitt durch das Doppelsitzventil der vorgenannten Ausführungsform (Offenstellung des Doppelsitzventils),

Fig. 8a die Draufsicht auf die vorgenannte Ausführungsform gemäß der Erfindung unterhalb des Flansches,

Fig. 9 und Fig. 10 Längsschnitte durch das Doppelsitzventil gemäß der vorgenannten Ausführungsform mit angesteuertem Steuerzylinder (Zwischenstellung zwischen Schließ- und Offenstellung des Doppelsitzventils),

Fig. 11 einen Längsschnitt durch das Doppelsitzventil gemäß der vorgenannten Ausführungsform in seiner Reinigungsstellung (Sitzreinigung),

Fig. 12a einen Längsschnitt durch das Doppelsitzventil gemäß der vorgenannten Ausführungsform im Bereich der Positions-Meldeeinrichtung und

Fig. 12b einen horizontalen Querschnitt durch das Doppelsitzventil gemäß der vorgenannten Ausführungsform im Bereich der Positions-Meldeeinrichtung.

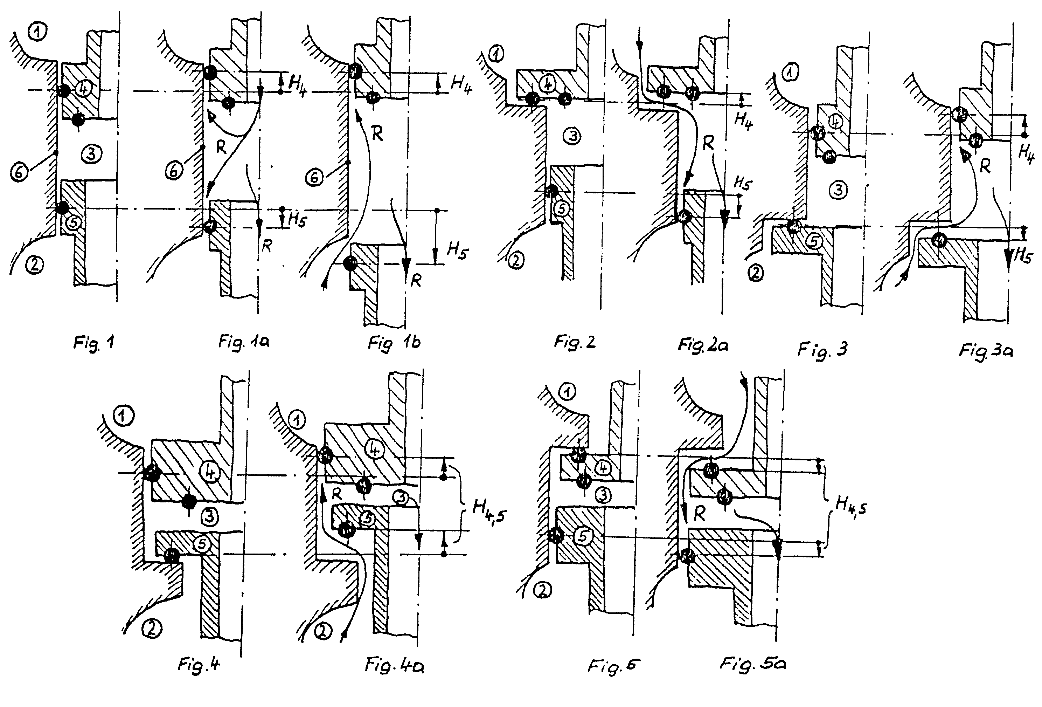

Die Schließglieder 4 und 5 sind schieberartig ausgebildet (Fig. 1 bis 1b) und über voneinander unabhängige Betätigungseinrichtungen um Teilhübe $H_4$ bzw. $H_5$ gegensinnig verschiebbar. Eine Reinigungsmittel-Zufuhr R erfolgt bei einer Verschiebung der Schließglieder 4 und 5 innerhalb der Zylinderbohrung 6 über den Leckage-Hohlraum 3 (Fig. 1a) oder bei einer Verschiebung des Schließgliedes 5 um den Teilhub $H_5$ über die Zylinderbohrung 6 hinaus aus dem Ventil-Gehäuseteil 2 (Fig. 1b). Im letztgenannten Fall ist das Schließglied 4 produktbeaufschlagt, während bei einer Vorrichtung nach Fig. 1a sowohl im Ventil-Gehäuseteil 1 als auch im Ventil-Gehäuseteil 2 Produkt anstehen kann.

In einer anderen vorteilhaften Vorrichtung sind die Schließglieder 4 und 5 über voneinander unabhängige Betätigungseinrichtungen um Teilhübe $H_4$ und $H_5$ gegensinnig verschiebbar (Fig. 2 bis 3a). Das produktbeaufschlagte Schließglied 5 (Fig. 2, Fig. 2a) bzw. 4 (Fig. 3, Fig. 3a) ist schiebeartig ausgebildet und zur Reinigung seines Sitzes um einen Teilhub $H_5$ bzw. $H_4$ in Richtung des produktführenden Ventil-Gehäuseteils 2 bzw. 1 innerhalb der Zylinderbohrung 6 verschiebbar. Das als Sitzteller ausgebildete Schließglied 4 (Fig. 2 und 2a) bzw. 5 (Fig. 3 und 3a) ist gegenüber dem produkbeaufschlagten um einen gegensinnigen Teilhub $H_4$ bzw. $H_5$ von seiner Sitzfläche verschiebbar, so daß das Reinigungsmittel über das Ventil-Gehäuseteil 1 (Fig. 2 und 2a) bzw. das Ventil-Gehäuseteil 2 (Fig. 3 und 3a) heranführbar ist.

In den Fig. 4 bis 5a sind die Schließglieder 4 und 5 miteinander koppelbar und über eine gemeinsame Betätigungseinrichtung um den Teilhub $H_4$, $H_5$ gleichsinnig verschiebbar. Das produktbeaufschlagte Schließglied 4 (Fig. 4 und 4a) bzw. 5 (Fig. 5 und 5a) ist in bekannter Weise schieberartig ausgebildet, wogegen das andere Schließglied 5 bzw. 4 die Form eines Sitztellers aufweist. Das Reinigungsmittel wird über einen Spalt zwischen dem Sitzteller 5 bzw. 4 und der mit diesem korrespondierenden Sitzfläche des betreffenden Ventil-Gehäuseteils 2 bzw. 1 jeweils an die beiden freigelegten Sitzflächen herangeführt.

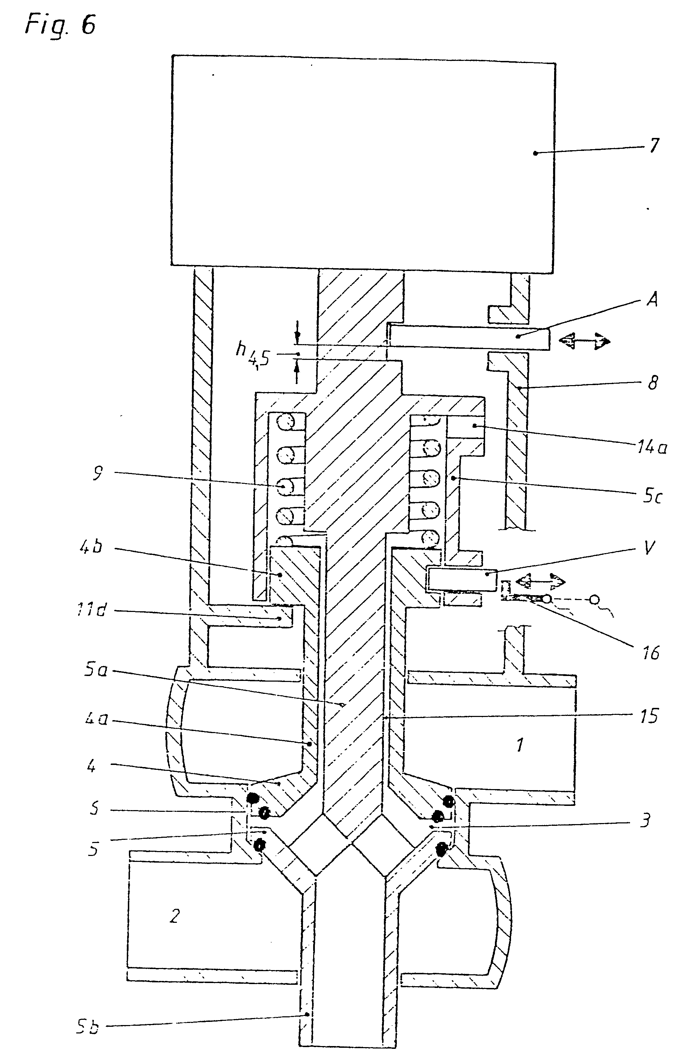

Die Vorrichtung zur gleichzeitigen Reinigung beider Sitzflächen eines wenigstens einseitig produktbeaufschlagten Doppelsitzventils soll im Zusammenhang mit dem grundsätzlichen Aufbau eines Doppelsitzventils nachfolgend kurz beschrieben werden. Die in Fig. 6 dargestellte Vorrichtung ist eine zweckmäßige Ausgestaltung und vorteilhafte Weiterentwicklung insbesondere der in den Fig. 4 bis 5a dargestellten Vorrichtungen zur Durchführung des erfindungsgemäßen Verfahrens.

Das Doppelsitzventil (Fig. 6) gliedert sich in Ventil-Gehäuseteile 1 und 2, ein Verbindungsgehäuse 8 und eine Betätigungseinrichtung 7. Zwischen den Gehäuseteilen 1 und 2 befinden sich Schließglieder 4 und 5. Das oben liegende, schieberartig ausgebildete Schließglied 4 besitzt als Sitzfläche eine Zylinderbohrung 6. Das unten liegende, als Sitzteller 5 ausgebildete Schließglied verfügt über eine eigene sich unter einem Winkel an die Zylinderbohrung 6 anschließende Sitzfläche und ist mit einem aus dem Ventil-Gehäuseteil 2 nach unten herausgeführten Rohr 5b verbunden. Zwischen den beiden Schließgliedern 4 und 5 befindet sich ein Leckage-Hohlraum 3. Der Sitzteller 5 ist über eine innenliegende Ventilstange 5a mit der Betätigungseinrichtung 7 verbunden. Die innenliegende Ventilstange 5a wird von einer mit dem schieberartig ausgebildeten Schließglied 4 verbundenen hohlen Ventilstange 4a konzentrisch umschlossen. Das als Hohlstangenkopf 4b ausgebildete obere Ende der hohlen Ventilstange 4a stützt sich über eine Feder 9 gegen den Boden einer mit der innenliegenden Ventilstange 5a verbundenen, nach unten offenen Federkammer 5c ab. Die Federkammer 6c verfügt über einen Reinigungsmittel-Anschluß 14a und ist über einen Ringspalt 15 zwischen der hohlen Ventilstange 4a und der innenliegenden Ventilstange 5a mit dem Leckage-Hohlraum 3 verbunden. Über steuerbare Verbindungsmittel V können die hohle Ventilstange 4a und die innenliegende Ventilstange 5a im Bereich ihrer gegenseitigen Überdeckung form- oder form- und kraftschlüssig miteinander gekoppelt werden. Die Position der Verbindungsmittel V wird über eine Positions-Meldeeinrichtung 16 überwacht. Mittels steuerbarer Vorkehrungen A kann der Hub der innenliegenden Ventilstange 5a und somit auch der Hub des Sitztellers 5 auf einen Teilhub $H_{4,5}$ begrenzt werden. Die vertikale Hubbewegung der hohlen Ventilstange 4a und somit des schieberartig ausgebildeten Schließgliedes 4 wird durch einen Anschlag 11d nach unten begrenzt.

Hinsichtlich der Funktionsweise des vorstehend beschriebenen Doppelsitzventils sind zwei Arbeitsweisen grundsätzlich zu unterscheiden: der Öffnungs- bzw. der Schließvorgang und der Reinigungsvorgang (Sitzreinigung) des Doppelsitzventils.

Der Öffnungsvorgang des Doppelsitzventils wird eingeleitet, indem sowohl die Vorkehrungen A als auch die Verbindungsmittel V angesteuert werden. Dies bedeutet konkret, daß die Arretierung der innenliegenden Ventilstange 5a durch die Vorkehrung A und die Kopplung der hohlen Ventilstange 4a mit der innenliegenden Ventilstange 5a über die Vorkehrungen V aufgehoben sind. Durch nachfolgende Ansteuerung der Betätigungseinrichtung 7 bewegt sich der über die innenliegende Ventilstange 5a mit letzterer verbundene Sitzteller 5 aufwärts, kommt bei seinem Öffnungsvorgang nach einem Teilhub am schieberartig ausgebildeten Schließglied 4 zum Anschlag und überführt dieses bei der weiteren Öffnungsbewegung gleichfalls in die Offenstellung. Die Verbindung zwischen den Ventil-Gehäuseteilen 1 und 2 ist hergestellt. Der Leckage-Hohlraum 3 zwischen dem Sitzteller 5 und dem schieberartig ausgebildeten Schließglied 4 ist zum Ventil-Gehäuseteil 1 hin abgeschlossen. Seine Reinigung ist in dieser Ventilstellung durch Zufuhr des Reinigungsmittels von außerhalb des Doppelsitzventils über den Reinigungsmittel-Anschluß 14a, die Federkammer 5c und den Ringspalt 15 möglich.

Die Schließstellung des Doppelsitzventils wird aus der Offenstellung heraus sinngemäß in umgekehrter Reihenfolge erreicht. Dabei kann der Vollzug der Schließstellung, d. h. die Einnahme der Schließlage sowohl des schieberartig ausgebildeten Schließgliedes 4 über die hohle Ventilstange 4a als auch diejenige des Sitztellers 5 über die innenliegende Ventilstange 5a durch die Positions-Meldeeinrichtung 16 mittelbar über die Verbindungsmittel V überwacht und gemeldet werden.

Die Sitzreinigung des Doppelsitzventils erfolgt durch alleinige Ansteuerung der Betätigungseinrichtung 7. Infolge der Kopplung der hohlen Ventilstange 4a mit der innenliegenden Ventilstange 5a über die Verbindungsmittel V werden der Sitzteller 5 und das schieberartig ausgebildete Schließglied 4 unter Wahrung ihres Abstandes, den sie in der Schließstellung zueinander einnehmen, um den Teilhub $H_{4,5}$ aus ihrer Schließlage angehoben. Die Teilhubbegrenzung erfolgt über die Vorkehrungen A. Das Reinigungsmittel und/oder Desinfektionsmittel kann nunmehr aus dem Gehäuseteil 2 über den Zuflußspalt zwischen dem Sitzteller 5 und seiner Sitzfläche in den Leckage-Hohlraum 3 eintreten. Zuvor muß es einen Drosselspalt zwischen dem Sitzteller 5 und der Zylinderbohrung 6 passieren. Durch düsenförmige Ausbildung eines Austritts des Drosselspaltes wird die durch den Teilhub $H_{4,5}$ auf der

Zylinderbohrung 6 freigelegte Sitzfläche des schieberartig ausgebildeten Schließgliedes 4 gezielt mit Reinigungs- und/oder Desinfektionsmittel gespült. Der Sitzreinigungsvorgang kann durch eine einmalige Teilhubbewegung oder durch mehrmals sich wiederholende Teilhubbewegungen durchgeführt werden. In jedem Falle läuft das Reinigungs- und/oder Desinfektionsmittel über ein aus dem Ventil-Gehäuseteil 2 nach unten herausgeführtes, mit dem Sitzteller 5 verbundenes Rohr 5b nach unten ab.

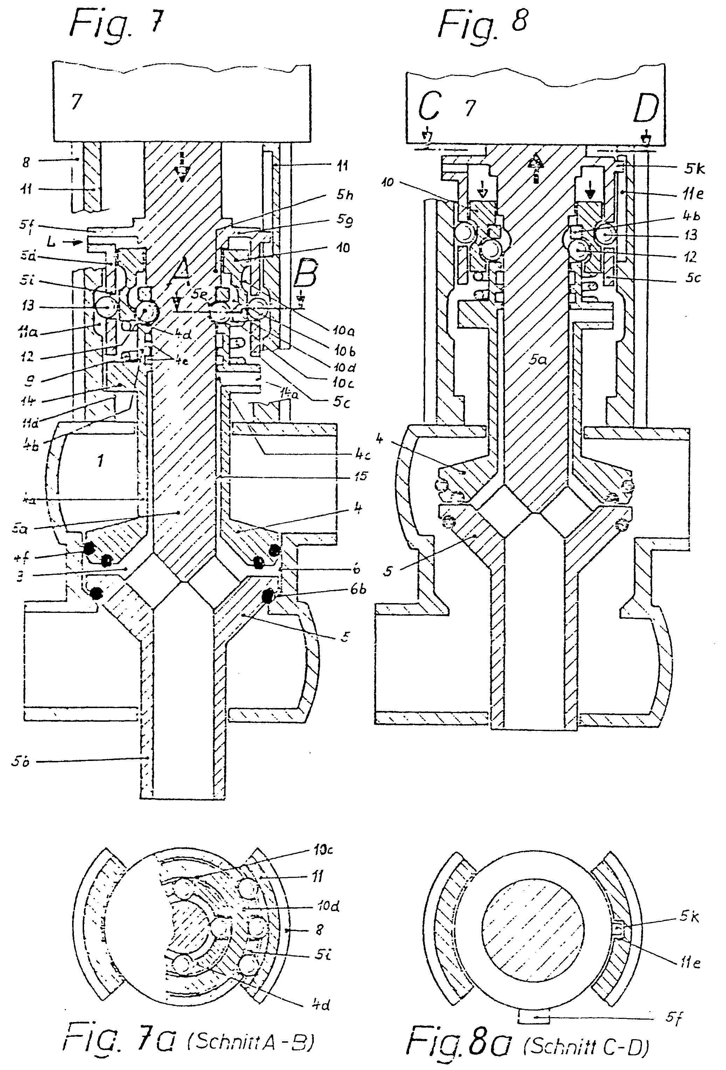

In dem Verbindungsgehäuse 8 (Fig. 7), das die Betätigungseinrichtung 7 mit dem Ventil-Gehäuseteil 1 verbindet, endet die die innenliegende Ventilstange 5a konzentrisch umschließende hohle Ventilstange 4a. Über eine Nabe 5h ist ein Bodenteil 5g eines Steuerzylinders 5d und einer sich unmittelbar unterhalb anschließenden Federkammer 5c mit der innenliegenden Ventilstange 5a lösbar verbunden. Im Steuerzylinder 5d ist ein ringförmiger Steuerkolben 10 angeordnet, der an seiner zylindrischen Außenseite gegen den Steuerzylinder 5d und an seiner zylindrischen Innenseite gegen die Nabe 5h abgedichtet ist. Mit dem als Hohlstangenkopf 4b ausgebildeten Ende der hohlen Ventilstange 4a ist ein Ring 14 formschlüssig verbunden. Letzterer ist mit dem Reinigungsmittel-Anschluß 14a ausgerüstet und verbindet über Durchtrittsöffnungen 4c im Hohlstangenkopf 4b den Ringspalt 15 zwischen der hohlen Ventilstange 4a und der innenliegenden Ventilstange 5a mit der Umgebung des Doppelsitzventils. Oberhalb der Durchtrittsöffnungen 4c ist der Hohlstangenkopf 4b gegen die innenliegende Ventilstange 5a mittels Dichtungen 4e abgedichtet, so daß an dieser Stelle der Ringspalt 15 nach oben begrenzt wird. Zwischen dem unmittelbar unterhalb der Federkammer 5c angeordneten Ring 14 und dem Steuerkolben 10 befindet sich eine vorgespannte Feder 9, welche einerseits den Steuerkolben 10 nach oben in seine Ruhelage gegen das Bodenteil 5g des Steuerzylinders 5d und andererseits den Hohlstangenkopf 4b und damit die hohle Ventilstange 4a mit ihrem schieberartig ausgebildeten Schließglied 4 über den Ring 14 nach unten auf einen Anschlag 11d drückt. Der Anschlag 11d ist ein radial nach innen am kreisringsegmentförmigen Verbindungsgehäuse-Einsatz 11 ausgebildeter Vorsprung, welcher die abwärts gerichtete Hubbewegung des schieberartig ausgebildeten Schließgliedes 4 begrenzt. Zwei Verbindungsgehäuse-Einsätze 11 sind diametral angeordnet und mit dem Verbindungsgehäuse 8 lösbar verbunden. Unterhalb des schieberartig ausgebildeten Schließgliedes 4, welches über eine an seinem Umfang angeordnete Dichtung 4f gegen die Zylinderbohrung 6 abgedichtet ist, befindet sich der Sitzteller 5, welcher über die Ventilstange 5a und die in der Betätigungseinrichtung 7 angeordnete Feder auf seine Sitzfläche 6b gedrückt wird. Zwischen dem schieberartig ausgebildeten Schließglied 4 und dem Sitzteller 5 befindet sich der Leckage-Hohlraum 3, welcher sowohl einerseits über den Ringspalt 15 als auch andererseits über das Rohr 5b mit der Umgebung des Doppelsitzventils verbunden ist.

Auf dem äußeren Zylindermantel des Steuerkolbens 10 ist eine äußere Steuerkolbennut 10a vorgesehen, an die sich unterhalb ein zylindrischer Steuerkolbenmantel 10d anschließt. Auf dem inneren Zylindermantel des Steuerkolbens 10 befindet sich eine innere Steuerkolbennut 10b, an die sich unterhalb eine Bohrung 10c anschließt. Auf gleicher Höhe mit dem Steuerkolbenmantel 10d bzw. der Bohrung 10c sind in der Schließstellung des Doppelsitzventils gesehen sowohl die Federkammer 5c einerseits als auch der Hohlstangenkopf 4b andererseits mit einer Reihe von Zylinderbohrungen 5i bzw. 4d versehen, wobei die Zylinderbohrungen 4d über den gesamten Umfang des Hohlstangenkopfes 4b, die Zylinderbohrungen 5i jedoch nur im vom Verbindungsgehäuse-Einsatz 11 umfaßten Zylindermantel-Bereich der Federkammer 5c gleichmäßig verteilt angeordnet sind (vergl. Fig. 7a). Die Bohrungsachse der Zylinderbohrungen 4d und 5i stehen senkrecht auf der Ventillängsachse und schneiden diese jeweils gruppenweise in einem Punkt. In jeder Zylinderbohrung 4d und 5i befindet sich eine innere bzw. äußere Kugel 12 bzw. 13, die in Richtung der Bohrungsachse leicht verschiebbar ist. Über den Steuerkolbenmantel 10d werden die äußeren Kugeln 13 gegen den Verbindungsgehäuse-Einsatz 11 gedrückt, welcher in diesem Bereich eine erste Längsnut 11a aufweist, die einen Teil der äußeren Kugel 13 aufnimmt. Über die Steuerkolbenbohrung 10c werden die inneren Kugeln 12 gegen die innenliegende Ventilstange 5a gedrückt, welche an dieser Stelle eine umlaufende Stangennut 5e aufweist, die einen Teil der inneren Kugel 12 aufnimmt. Der Steuerzylinder 5d besitzt an seinem Umfang in Höhe des Bodenteils 5g einen Druckmittel-Anschluß 5f, über den ein Druckmittel L zugeführt und die Stirnseite des Steuerkolbens 10 beaufschlagt werden kann. Um ein Verdrehen der mit äußeren Kugeln 13 ausgestatteten Federkammer 5c innerhalb des kreisringsegmentförmigen Verbindungsgehäuse-Einsatzes 11 zu verhindern, ist mit der äußeren Mantelfläche des Steuerzylinders 5d ein Stift 5k festverbunden, der in einer im rechten Verbindungsgehäuse-Einsatz 11 (Fig. 8 und 8a) ausgebildeten zweiten Längsnut 11e in Richtung der Ventillängsachse verschiebbar ist.

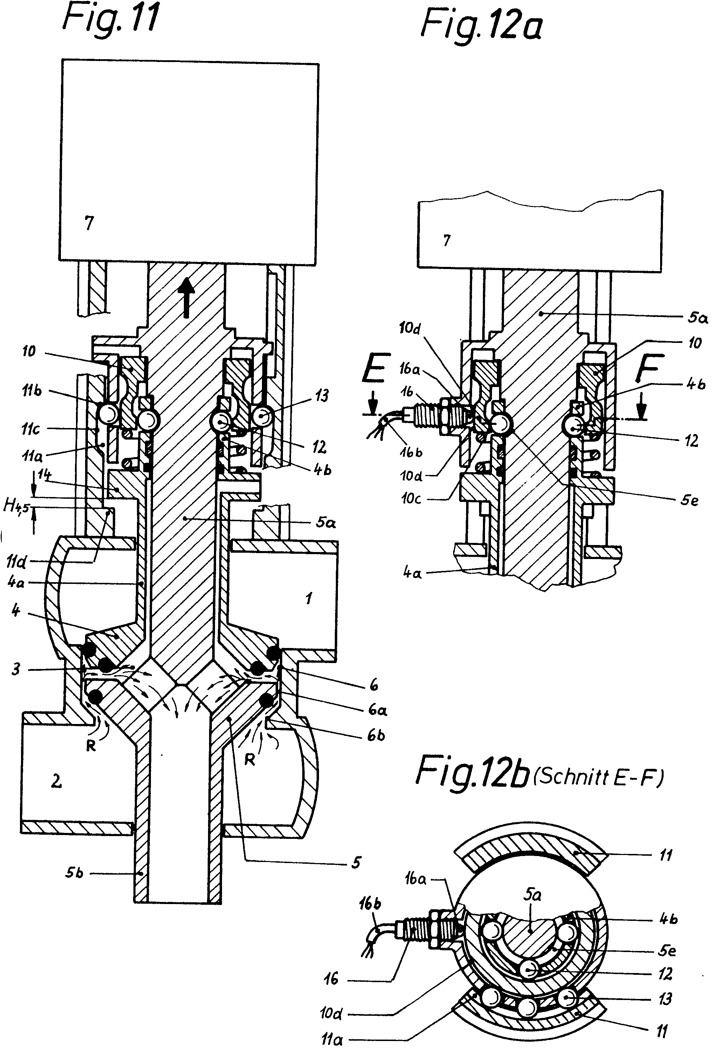

In der Schließstellung (Fig. 7) des Doppelsitzventils nimmt der Steuerkolben 10 seine in Fig. 12a dargestellte Ruhelage ein. In dieser Stellung werden die inneren Kugeln 12 über die Bohrung 10c in die Stangennut 5e und die äußeren Kugeln 13 über den Steuerkolbenmantel 10d in die erste Längsnut 11a des Verbindungsgehäuse-Einsatzes 11 gedrückt. Der Hohlstangenkopf 4b und damit die hohle Ventilstange 4a mit dem schieberartig ausgebildeten Schließglied 4 ist mit der innenliegenden Ventilstange 5a und seinem Sitzteller 5 gekoppelt (siehe Fig. 12b). Falls die Betätigungseinrichtung 7 nicht angesteuert ist, liegt der Sitzteller 5 auf seiner Sitzfläche 6b auf, während sich das schieberartig ausgebildete Schließglied 4 in einem bestimmten Abstand oberhalb des Sitztellers innerhalb der Zylinderbohrung 6 befindet. Die Verschiebung des schieberartig ausgebildeten Schließgliedes 4 nach unten infolge der durch die Feder 9 ausgeübten Kraft wird zusätzlich zu dem von der inneren Kugel 12 ausgeübten Kopplungsmechanismus zwischen dem Hohlstangenkopf 4b und der innenliegenden Ventilstange 5a über den Anschlag 11d, auf dem der mit dem Hohlstangenkopf 4b verbundene Ring 14 aufsitzt, verhindert (siehe auch Fig. 7). Ein Taststift 16a (Fig. 12a und 12b) ist in der vorstehend beschriebenen Ruhelage des Steuerkolbens 10 bzw. der Schließlage des Doppelsitzventils durch den Steuerkolbenmantel 10d betätigt, so daß die den Verschiebungsweg des Taststiftes 16a als Eingangssignal verarbeitende Positions-Meldeeinrichtung 16 über eine Leitung 16b ein vorzugsweise binär digitales elektrisches Ausgangssignal weitergeben kann. Die Positions-Meldeeinrichtung 16 ist in der in Fig. 12a dargestellten Höhenlage angeordnet. Sie befindet sich weiterhin in der Draufsicht gesehen (vergl. Fig. 12b) zwischen den Verbindungsgehäuse-Einsätzen 11.

Die Vorrichtung zur gleichzeitigen Reinigung beider Sitzflächen eines wenigstens einseitig produktbeaufschlagten Doppelsitzventils arbeitet wie nachfolgend beschrieben. In der Schließstellung des Doppelsitzventils (Fig. 7 und 7a) sind die Sitzteller 5 und das schieberartig ausgebildete Schließglied 4 — wie bereits in der Aufbaubeschreibung eingangs erläutert — über den Kopplungsmechanismus mit Hilfe der inneren Kugeln 12 miteinander gekoppelt. Dabei wird der Sitzteller 5 über die Feder innerhalb der Betätigungseinrichtung 7 auf seine Sitzfläche 6b gedrückt, während das in einem bestimmten Abstand oberhalb des Sitztellers angeordnete schieberartig ausgebildete Schließglied 4 in seiner abwärts gerichteten Hubbewegung zusätzlich durch den Anschlag 11d begrenzt wird. Die Öffnungsbewegung des Doppelsitzventils soll nachfolgend anhand der Fig. 7, 9, 10 und 8 stufenweise beschrieben werden.

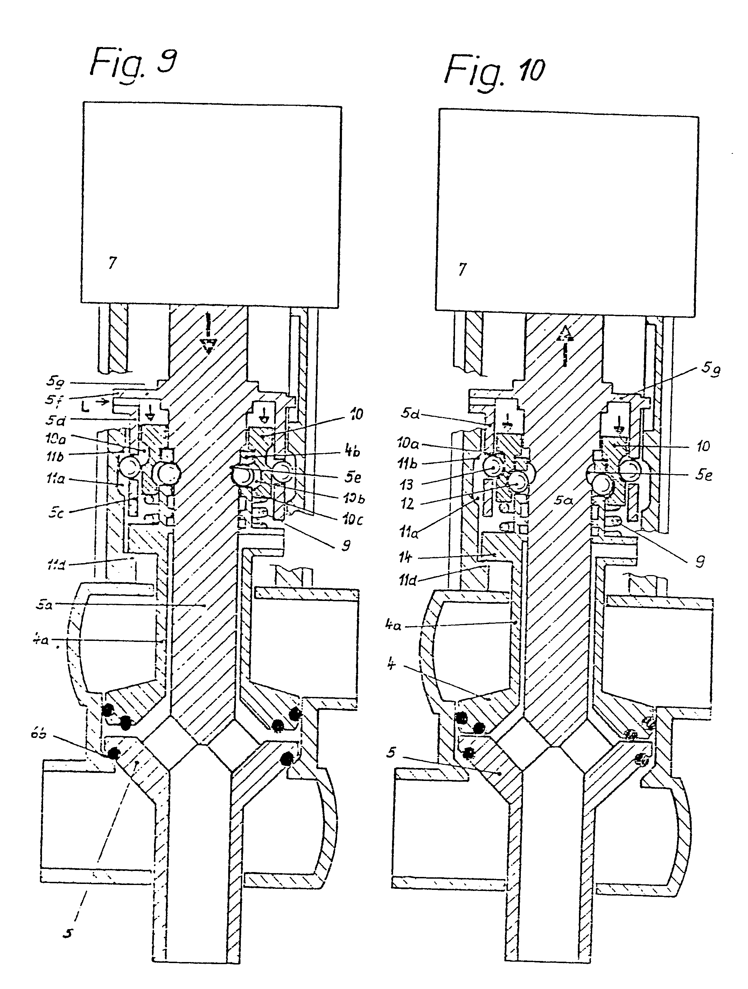

Sobald der Steuerzylinder 5d mit seinem Steuerkolben 10 durch Einleitung von Druckmittel L über den Druckmittel-Anschluß 5f angesteuert wird, bewegt sich der Steuerkolben 10 abwärts (Fig. 9), bis er an dem Hohlstangenkopf 4b zur Anlage kommt. Der Druck des Druckmittels L ist so bemessen, daß zwar die Kraft der Feder 9, nicht aber die Schließkraft der in der Betätigungseinrichtung 7 angeordneten Feder überwunden wird. Dies bedeutet, daß der Sitzteller 5 durch Ansteuerung des Steuerzylinders 5d nicht von seiner Sitzfläche 6b angehoben werden kann. Erst wenn zusätzlich die Betätigungseinrichtung 7 angesteuert wird, beginnt die Aufwärtsbewegung der innenliegenden Ventilstange 5a. Durch die Abwärtsbewegung des Steuerkolbens 10 werden die inneren Kugeln 12, die durch die Aufwärtsbewegung der innenliegenden Ventilstange 5a aus der Stangennut 5e herausgedrängt werden in radialer Richtung gesehen von außen nicht mehr durch die Steuerkolbenbohrung 10c begrenzt, sondern können in die innere Steuerkolbennut 10b ausweichen. Durch dieses Ausweichen ist eine aufwärts gerichtete Verschiebung der innenliegenden Ventilstange 5a, des mit ihr verbundenen Steuerzylinders 5d und der Federkammer 5c möglich, ohne daß der Hohlstangenkopf 4b und damit die hohle Ventilstange 4a mitgenommen werden. Der Steuerkolben 10 bleibt absolut betrachtet in seiner momentanen Lage, während sich sein Abstand zum Bodenteil 5g des Steuerzylinders 5d vergrößert. Sobald die in der Federkammer 5c angeordneten und von dieser aufwärts mitgenommenen äußeren Kugeln 13 an der oberen Flankenfläche 11b der ersten Längsnut 11a zur Anlage kommen, werden sie von dieser in die durch den Steuerkolben 10 herangeführte äußere Steuerkolbennut 10a verdrängt (Fig. 10). Nach dieser Teilhubbewegung, die ausschließlich vom Sitzteller 5 vollzogen wurde, ist dieser am schieberartig ausgebildeten Schließglied 4 zur Anlage gekommen und kann nunmehr letzteres mit seiner hohlen Ventilstange 4a bei der Öffnungsbewegung mitnehmen. Sobald die äußeren Kugeln 13 die erste Längsnut 11a bei ihrer Aufwärtsbewegung verlassen haben, kann auf eine Ansteuerung des Steuerzylinders 5d verzichtet werden. Die Offenstellung des Doppelsitzventils ist über den durch die Betätigungseinrichtung 7 vorgesehenen Öffnungshub bestimmt (Fig. 8). In der Offenstellung des Doppelsitzventils sind der Sitzteller 5 und das schieberartig ausgebildete Schließglied 4 wieder miteinander gekoppelt oder besser ausgedrückt, gegeneinander verriegelt. Die Verriegelung kommt über die inneren und äußeren Kugeln 12 bzw. 13 zustande. Die inneren Kugeln 12 verzahnen den Hohlstangenkopf 4b mit dem Steuerkolben 10 einerseits, und die äußeren Kugeln 13 verzahnen die Federkammer 5c und damit die innenliegende Ventilstange 5a mit dem Steuerkolben 10 andererseits. Diese Verriegelung innerhalb der beschriebenen Vorrichtung ist ein Vorteil gegenüber der in Fig. 6 dargestellten Vorrichtung, da dadurch bei einer über den Reinigungsmittel-Anschluß 14a mit Reinigungs- und/oder Desinfektionsmittel R vorgenommenen Reinigung des Leckage-Hohlraumes 3 eine Verschiebung des schieberartig ausgebildeten Schließgliedes 4 nach oben und damit eine Öffnung des Leckage-Hohlraumes 3 innerhalb des Ventil-Gehäuseteils 1 sicher verhindert wird.

Der Schließvorgang des Doppelsitzventils erfolgt sinngemäß in umgekehrter Reihenfolge. Zunächst kommt bei der Schließbewegung das schieberartig ausgebildete Schließglied 4 über den Ring 14 (Fig. 10) am Anschlag 11d zur Anlage. Gleichzeitig verdrängt bei der weiteren Abwärtsbewegung der innenliegenden Ventilstange 5a und damit des Steuerzylinders 5d, der durch die Kraft der Feder 9 relativ zum Bodenteil 5g verschiebbare Steuerkolben 10 die äußeren Kugeln 13 in die erste Längsnut 11a. In dem Maße, wie bei der weiteren Abwärtsbewegung der innenliegenden Ventilstange 5a für die inneren Kugeln 12 durch die Stangennut 5e eine Ausweichmöglichkeit geschaffen wird, werden diese durch den federkraftbeaufschlagten Steuerkolben 10 in die Stangennut 5e hineingedrängt und zum Schluß in der Schließlage des Sitztellers 5 und der Ruhelage des Steuerkolbens 10 durch die Bohrung 10c an einem nach außen gerichteten radialen Ausweichen gehindert.

Um absolut sicher zu gehen, daß in der Endphase des Schließvorganges die radialen Kugelbewegungen, welche ausschließlich durch den federkraftbelasteten Steuerkolben 10 bewirkt werden, tatsächlich vollzogen wurden, wird die Lage des Steuerkolbens 10 durch die Positions-Meldeeinrichtung 16 erfaßt und gemeldet. Nur die Einnahme der Ruhestellung des Steuerkolbens 10 stellt hinreichend sicher, daß sich die äußeren Kugeln 13 in der ersten Längsnut 11a und die inneren Kugeln 12 in der Stangennut 5e befinden, so daß sich sowohl der Sitzteller 5 als auch das schieberartig ausgebildete Schließglied 4 in ihrer jeweiligen Schließlage befinden. Die Positions-Meldeeinrichtung 16 ist höhenmäßig so angeordnet, daß ihr Taststift 16a nur in der Ruhelage des Steuerkolbens 10 über dessen Steuerkolbenmantel 10d betätigt wird und somit ein die Schließstellung des Doppelsitzventils signalisierendes Eingangssignal empfängt (Fig. 12a).

Die Sitzreinigung des Doppelsitzventils (Fig. 11) kann erst eingeleitet werden, wenn die Positions-Meldeeinrichtung 16 die Schließstellung des Doppelsitzventils gemeldet hat. Ausgangsstellung für die Sitzreinigung ist demnach die unter Fig. 7 bereits beschriebene Anordnung der Bauteile. Bei der Sitzreinigung wird lediglich die Betätigungseinrichtung 7 angesteuert, so daß zusammen mit der innenliegenden Ventilstange 5a gleichzeitig der Hohlstangenkopf 4b und damit die hohle Ventilstange 4a angehoben werden. Der in der Schließstellung des Doppelsitzventils zwischen dem Sitzteller 5 und dem schieberartig ausgebildeten Schließglied 4 vorgesehene Abstand bleibt dadurch permanent erhalten. Die Aufwärtsbewegung der über die inneren und äußeren Kugeln 12 bzw. 13 miteinander verbundenen Bauteile ist beendet, wenn die äußeren Kugeln 13 an der oberen Flankenfläche 11b der ersten Längsnut 11a zur Anlage kommen. In dieser Lage haben sich sowohl der Sitzteller 5 als auch das schieberartig ausgebildete Schließglied 4 um den Teilhub $H_{4,5}$ aus ihrer Schließlage aufwärts bewegt. Zwischen dem Sitzteller 5 und seiner Sitzfläche 6b ist dadurch ein Zuflußspalt für das Reinigungsmittel R entstanden. Durch die Verschiebung des schieberartig ausgebildeten Schließgliedes 4 in Richtung des produktbeaufschlagten Ventil-Gehäuseteils 1 wird auf der Oberfläche der Zylinderbohrung 6 ein dem Teilhub $H_{4,5}$ entsprechend breiter, in der Regel mit Produkt benetzter ringförmiger Streifen freigelegt. Das Reinigungs- und/oder Desinfektionsmittel R kann nunmehr über den Zuflußspalt zwischen dem Sitzteller 5 und seiner Sitzfläche 6b und einen Drosselspalt 6a zwischen Sitzteller 5 und Zylinderbohrung 6 in den Leckage-Hohlraum 3 eintreten. Durch düsenförmige Ausbildung des Austritts des Drosselspaltes 6a wird erreicht, daß die durch den Teilhub $H_{4,5}$ auf der Zylinderbohrung 6 freigelegte Sitzfläche des schieberartig ausgebildeten Schließgliedes 4 gezielt mit Reinigungs- und/oder Desinfektionsmittel R bespült werden kann. Durch die erfindungsgemäße Bemessung des Zuflußspaltes und des zwischen dem Sitzteller 5 und dem schieberartig ausgebildeten Schließglied 4 wirksamen Abflußspaltes wird ein Druckaufbau im Leckage-Hohlraum vermieden. Das Reinigungs- und/oder Desinfektionsmittel R kann drucklos über das mit dem Sitzteller 5 verbundene, nach unten aus dem Ventilgehäuseteil 2 herausgeführte Rohr 5b abfließen.

Die Sitzreinigung des Doppelsitzventils kann durch einmalige Teilhubbewegung oder impulsweise durch mehrmals sich wiederholende Teilhubbewegungen durchgeführt werden.

## Patentansprüche

1. Verfahren zur gleichzeitigen Reinigung beider Sitzflächen eines wenigstens einseitig produktbeaufschlagten Doppelsitzventils, insbesondere bei dessen Einsatz in der Nahrungsmittelindustrie, mit einem an sich bekannten zum Zwecke der Reinigung mit einem Reinigungs- und/oder Desinfektionsmittel beaufschlagten Doppelsitzventil, welches mit zwei voneinander unabhängigen, relativ zueinander bewegbaren Schließgliedern (4, 5) ausgestattet ist, die mittels Betätigungseinrichtungen aus der Schließ- in eine Offenstellung bewegbar sind und von denen wenigstens ein produktbeaufschlagtes Schließglied (4, 5) schieberartig ausgebildet und innerhalb einer zwei Ventil-Gehäuseteile (1, 2) miteinander verbindenden Zylinderbohrung (6) gleitend und radial dichtend verschiebbar ist, und wobei die Schließglieder (4, 5) sowohl in der Schließ- als auch in der Offenstellung einen Leckage-Hohlraum (3) zwischen sich einschließen, der über eine Bohrung innerhalb der aus dem Ventilgehäuse nach unten herausgeführten Ventilstange (5b) des unteren Schließgliedes (5) mit der Atmosphäre verbunden ist, dadurch gekennzeichnet, daß das produktbeaufschlagte, schieberartig ausgebildete Schließglied (4 oder 5) zur Reinigung und/oder Desinfektion seines Sitzes um einen Teilhub in Richtung des produktführenden Ventil-Gehäuseteils (1 oder 2) innerhalb der Zylinderbohrung (6) verschoben wird, daß gleichzeitig das andere Schließglied (5 bzw. 4) gegenüber dem produktbeaufschlagten um einen gleich- oder gegensinnigen Teilhub verschoben wird, und daß das Reinigungs- und/oder Desinfektionsmittel über das nicht produktführende Ventil-Gehäuseteil (2 bzw. 1) und/oder von außerhalb des Doppelsitzventils über den Leckage-Hohlraum (3) an die beiden durch die Teilhübe der Schließglieder freigelegten Sitzflächen herausgeführt wird.

2. Verfahren nach Anspruch 1, dadurch gekennzeichnet, daß der Reinigungsvorgang durch mehrmals sich wiederholende Teilhubbewegungen durchgeführt wird.

3. Vorrichtung zur Durchführung des Verfahrens nach einem der Ansprüche 1 und 2, dadurch gekennzeichnet, daß beide Schließglieder (4, 5) schieberartig ausgebildet und über voneinander unabhängige Betätigungseinrichtungen um Teilhübe ($H_4$, $H_5$) gegensinnig verschiebbar sind.

4. Vorrichtung zur Durchführung des Verfahrens nach einem der Ansprüche 1 und 2, dadurch gekennzeichnet, daß die Schließglieder (4, 5) über voneinander unabhängige Betätigungseinrichtung um Teilhübe ($H_4$, $H_5$) gegensinnig verschiebbar sind, daß gleichzeitig das als Sitzteller ausgebildete Schließglied (4 bzw. 5) gegenüber dem produktbeaufschlagten um einen gleichsinnigen Teilhub ($H_4$ bzw. $H_5$) von seiner Sitzfläche verschiebbar ist und daß das Reinigungs- und/oder Desinfektionsmittel über das nicht produktführende Ventil-Gehäuseteil (1 bzw. 2) an die beiden freigelegten Sitzflächen heranführbar ist.

5. Vorrichtung zur Durchführung des Verfahrens nach einem der Ansprüche 1 und 2, dadurch gekennzeichnet, daß die Schließglieder (4, 5) miteinander koppelbar und über eine gemeinsame Betätigungseinrichtung um den Teilhub ($H_{4,5}$) gleichsinnig verschiebbar sind, daß das produktbeaufschlagte Schließglied (4 oder 5) schieberartig und das andere Schließglied (5 bzw. 4) als Sitzteller ausgebildet ist und daß das Reinigungs- und/oder Desinfektionsmittel über das nicht produktführende Ventil-Gehäuseteil (2 bzw. 1) an die beiden freigelegten Sitzflächen heranführbar ist.

6. Vorrichtung nach Anspruch 5, dadurch gekennzeichnet, daß

a) die Ventilstangen (4a, 5a) beider Schließglieder (4, 5) in eine Richtung weisen, teleskopartig ineinanderfassen und

b) auf der Seite des schieberartig ausgebildeten Schließgliedes (4) aus dem Ventilgehäuse (1 bzw. 2) herausgeführt sind,

c) die innenliegende Ventilstange (5a) mit dem Sitzteller (5) und mit der Betätigungseinrichtung (7) verbunden ist,

d) die Ventilstangen (4a, 5a) im Bereich ihrer gegenseitigen Überdeckung mittels steuerbarer Verbindungsmittel (V), deren Position über eine Positions-Meldeeinrichtung (16) überwacht werden kann, form- oder form- und kraftschlüssig miteinander koppelbar sind und

e) der Hub der innenliegenden Ventilstange (5a) in Verbindung mit dem Sitzteller (5) mittels steuerbarer Vorkehrungen (A) auf einen Teilhub ($H_{4,5}$) begrenzt und die Schließlage des schieberartig ausgebildeten Schließgliedes (4) durch einen Anschlag (11d) bestimmt werden kann.

7. Vorrichtung nach Anspruch 6, dadurch gekennzeichnet, daß der durch den Teilhub ($H_{4,5}$) mittels der steuerbaren Vorkehrungen (A) zwischen dem Sitzteller (5) und seiner Sitzfläche erzeugte wirksame Zuflußspalt für das Reinigungs- und/oder Desinfektionsmittel druckverlustbehafteter ist als der zwischen dem Sitzteller (5) und dem schieberartig ausgebildeten Schließglied (4) wirksame Abflußspalt.

8. Vorrichtung nach den Ansprüchen 6 und 7, dadurch gekennzeichnet, daß ein von dem Sitzteller (5) und der Zylinderbohrung (6) gebildeter kreisringförmiger Drosselspalt einen höheren Druckverlust besitzt, als ein Zuflußspalt zwischen dem Sitzteller (5) und seiner Sitzfläche, und daß ein Austritt des Drosselspaltes derart düsenförmig ausgebildet ist, daß die durch den Teilhub ($H_{4,5}$) auf der Zylinderbohrung (6) freigelegte Sitzfläche des schieberartig ausgebildeten Schließgliedes (4) gezielt mit Reinigungs- und/oder Desinfektionsmittel bespült werden kann.

9. Vorrichtung nach einem der Ansprüche 6 bis 8, dadurch gekennzeichnet, daß die mit dem Sitzteller (5) verbundene innenliegende Ventilstange (5a) an ihrem dem Sitzteller abgewandten Ende mit einem konzentrischen Steuerzylinder (5d) verbunden ist, welcher einen Druckmittelanschluß (5f) besitzt und in Richtung des Sitztellers (5) offen ist, wodurch eine Federkammer (5c) gebildet wird, daß zwischen dem Steuerzylinder (5d) und der innenliegenden Ventilstange (5a) ein Steuerkolben (10) mit kreisringförmigen Querschnitt angeordnet ist, wobei letzterer sowohl auf seinem inneren als auch auf seinem äußeren Zylindermantel eine umlaufende innere bzw. äußere Steuerkolbennut (10a bzw. 10b) aufweist und von einer sich mittelbar über einen an der äußeren, hohlen Ventilstange (4a) angeordneten Ring (14) abstützenden Feder (9) in seine Ruhelage gedrückt wird, daß die hohle Ventilstange (4a) an ihrem dem Schließglied abgewandten Ende mit einem Kopf (4b) versehen ist, in dessen Bereich die innenliegende Ventilstange (5a) eine umlaufende Stangennut (5e) aufweist, daß zwischen der Betätigungseinrichtung (7) und dem Ventilgehäuse (1, 2) ein hohles Verbindungsgehäuse (8) angeordnet ist, worin zwei kreisringsegmentförmige, diametral angeordnete, die Federkammer (5c) und den Steuerzylinder (5d) konzentrisch umschließende Verbindungsgehäuse-Einsätze (11) angeordnet sind, welche in ihrem inneren Zylindermantel jeweils mit einer zur Ventillängsachse parallelen ersten Längsnut (11a) versehen sind, daß sowohl über den gesamten Umfang des Hohlstangenkopfes (4b) als auch im vom Verbindungsgehäuse-Einsatz (11) umfaßten Zylindermantelbereich der Federkammer (5c) gleichmäßig verteilte Zylinderbohrungen (4d bzw. 5i) vorgesehen sind, deren Bohrungsachsen senkrecht auf der Ventillängsachse stehen und diese jeweils gruppenweise in einem Punkt schneiden, daß sich in jeder Zylinderbohrung (4d bzw. 5i) eine annähernd durchmessergleiche innere bzw. äußere Kugel (12 bzw. 13), die in Richtung der Bohrungsachse leicht verschiebbar ist, befindet, daß ein mit der äußeren Mantelfläche des Steuerzylinders (5d) verbundener Stift (5k) in einer im Verbindungsgehäuse-Einsatz (11) ausgebildeten zweiten Längsnut (11e) in Richtung der Ventillängsachse verschiebbar ist, daß in der Schließstellung des Doppelsitzventils

f) die inneren Kugeln (12) jeweils einerseits von der Fläche der Stangennut (5e) und andererseits von der den Hohlstangenkopf (4b) konzentrisch umschließenden Wand einer zylindrischen Bohrung (10c) im Steuerkolben, die sich unterhalb der inneren Steuerkolbennut (10b) befindet, mit relativ geringem radialen Spiel begrenzt werden,

g) die äußeren Kugeln (13) jeweils einerseits vom Nutgrund (11c) der ersten Längsnut (11a) und andererseits vom Steuerkolbenmantel (10d), welcher von der Federkammer (5c) umschlossen wird und sich unterhalb der äußeren Steuerkolbennut (10a) befindet, mit relativ geringem radialem Spiel begrenzt werden,

daß in der Offenstellung des Doppelsitzventils der Steuerkolben (10) relativ zum Steuerzylinder (5d) in Ventillängsrichtung derart verschoben ist, daß

h) die inneren Kugeln (12) jeweils einerseits vom Zylindermantel der Ventilstange (5a) und andererseits von der Fläche der inneren Steuerkolbennut (10b) mit relativ geringem radialen Spiel begrenzt werden,

i) die äußeren Kugeln (13) jeweils einerseits von dem inneren Zylindermantel des infrage kommenden Verbindungsgehäuse-Einsatzes (11) und andererseits von der Fläche der äußeren Steuerkolbennut (10a) mit relativ geringem radialen Spiel begrenzt werden,

und daß in der Reinigungsstellung des Doppelsitzventils, deren notwendige Voraussetzungen durch Erfüllung der die Schließstellung des Doppelsitzventils kennzeichnenden Merkmale f) und g) geschaffen werden, die äußeren Kugeln (13) eine obere Flankenfläche (11b) der ersten Längsnut (11a) berühren, wobei in der durch die Merkmale f) und g) gekennzeichneten Schließstellung des Doppelsitzventils in Ventillängsrichtung gesehen zwischen den äußeren Kugeln (13) und der der Kugelform angepaßten oberen Flankenfläche (11b) der ersten Längsnut (11a) ein wirksamer Abstand vorgesehen ist, der dem für die Reinigungsstellung erforderlichen Teilhub ($H_{4,5}$) der Schließglieder (4, 5) entspricht.

10. Vorrichtung nach einem der Ansprüche 6 bis 9, dadurch gekennzeichnet, daß ein zum Lekkage-Hohlraum (3) führender Ringspalt (15) zwischen der hohlen Ventilstange (4a) und der innenliegenden Ventilstange (5a) über Durchtrittsöffnungen (4c) im Hohlstangenkopf (4b) mit einem Reinigungsmittel-Anschluß (14a), der sich im unterhalb der Federkammer (5c) auf dem Hohlstangenkopf (4b) angeordneten Ring (14) befindet, verbunden ist.

11. Vorrichtung nach einem der Ansprüche 6 bis 10, dadurch gekennzeichnet, daß die Schließlage beider Schließglieder (4, 5) des Doppelsitzventils durch eine einzige, die Lage eines Bauteils erfassende Positions-Meldeeinrichtung (16) gemeldet wird.

12. Vorrichtung nach Anspruch 11, dadurch gekennzeichnet, daß die Schließlage beider Schließglieder (4, 5) des Doppelsitzventils mittelbar über ein bewegliches Bauelement gemeldet und auf die Positions-Meldeeinrichtung (16) übertragen wird, wobei die die ordnungsgemäße Schließstellung des Doppelsitzventils signalisierende Lage des beweglichen Bauelementes eindeutig durch die der Schließstellung entsprechende Lage sowohl der hohlen Ventilstange (4a) als auch der innenliegenden Ventilstange (5a) bestimmt wird.

13. Vorrichtung nach einem der Ansprüche 6 bis 12, dadurch gekennzeichnet, daß als bewegliches Bauelement der Steuerkolben (10) vorgesehen ist, der in seiner der ordnungsgemäßen Schließstellung des Doppelsitzventils entsprechenden Ruhelage mittels des Steuerkolbenmantels (10d) die Positions-Meldeeinrichtung (16) ansteuert, welche vorzugsweise über einen Taststift (16a) ein wegabhängiges Eingangssignal empfängt und über eine Leitung (16b) ein binär digitales elektrisches Ausgangssignal weitergibt.

14. Vorrichtung nach Anspruch 6, dadurch gekennzeichnet, daß die zur Realisierung der Merkmale d) und e) notwendigen Bauteile in einem standardisierten Verbindungsgehäuse (8) zusammengefaßt untergebracht werden.

**Claims**

1. Process for simultaneously cleaning both seats of a double-seat valve in at least unilateral communication with a fluid, particularly with respect to the use of said valve in the food industry, by means of a double-seat valve, known in the art, which may be cleaned by cleansing agent and/or disinfectant, said double-seat valve being provided with two closing members (4, 5) which are movable relative to one another and independently of one another and which can be moved by means of operating devices from the closed position to an open position, whereby at least one product-communicated closing member (4, 5) is formed as a slide member, slidingly movable and radially sealing within a cylinder bore (6) which interconnects two valve housing portions (1, 2), the closing members (4, 5) enclosing between them, both in the closed and in the open position, a leakage cavity (3) which is connected to the atmosphere via a bore within the valve stem (5b) of the lower closing member (5) extending downwards out of the valve housing, characterized in that, for the purpose of cleaning and/or disinfecting of its seat, the product-communicated slide-shaped closing member (4 or 5) is moved within the cylinder bore (6) to the extent of a partial lift in the direction of the product-carrying valve housing portion (1 or 2), that the other closing member (5 or 4 respectively) is simultaneously moved to the extent of a partial lift in the same direction as, or the opposite direction to, the product-communicated member, and that the cleansing agent and/or disinfectant is passed via the non-product-carrying valve housing portion (2 or 1 respectively) and/or from outside the double seat valve via the leakage cavity (3) to the two seats, the latter being exposed as a result of the partial lifting of the closing members.

2. Process according to Claim 1, characterized in that the cleaning procedure is implemented by several repetitions of the partial lifting movement.

3. Apparatus for implementing the process according to one of Claims 1 and 2, characterized in that both closing members (4, 5) take the form of slides and can be moved in opposite directions to the extent of partial lifts ($H_4$, $H_5$) by means of operating devices which operate independently of one another.

4. Apparatus for implementing the process according to one of Claims 1 and 2, characterized in that the closing members (4, 5) can be moved in opposite directions to the extent of partial lifts ($H_4$, $H_5$) by means of operating devices which operate independently of one another, that the closing member (4 or 5 respectively) which takes the form of a seat disk is simultaneously movable away from its seat to the extent of a partial lift ($H_4$ or $H_5$ respectively) in the same direction as the product-communicated member, and that the cleansing agent and/or disinfectant is applicable via the non-product-carrying valve housing portion (1 or 2 respectively) to the two exposed seats.

5. Apparatus for implementing the process according to one of Claims 1 and 2, characterized in that the closing members (4, 5) are capable of being coupled with each other and slidingly movable by a common operating device in the same direction to the extent of the partial lift ($H_{4,5}$), that the product-communicated closing member (4 or 5) is formed as a slide member and the other closing member (5 or 4 respectively) is formed as a seat disk, and that the cleansing agent and/or disinfectant is applicable to the two exposed seats via the non-product-carrying valve housing portion (2 or 1 respectively).

6. Apparatus according to Claim 5, characterized in that

a) the valve stems (4a, 5a) of both closing members (4, 5) face in one direction, fit telescope-wise one inside the other and

b) extend outwardly from the valve housing (1 or 2 respectively) on the same side as the slide-shaped closing member (4),

c) the inner valve stem (5a) is connected to the seat disk (5) and to the operating device (7),

d) the valve stems (4a, 5a) can be coupled together in their overlapping region, either in positive or positive and non-positive manner, by controllable connecting means (V), the position thereof being controlled by a position indicating device (16), and

e) the lift of the inner valve stem (5a) connected to the seat disk (5) is limited to a partial lift ($H_{4,5}$) by means of controllable means (A) and the closed position of the slide-shaped closing member (4) can be determined by a limit stop (11d).

7. Apparatus according to Claim 6, characterized in that the effective admission gap for the cleansing agent and/or disinfectant which results from the partial lift ($H_{4,5}$) determined by the controllable means (A) and arranged between the seat disk (5) and its associated seat is more liable to pressure loss than the effective outlet gap between the seat disk (5) and the slide-shaped closing member (4).

8. Apparatus according to Claims 6 and 7, characterized in that an annular throttle gap formed by the seat disk (5) and the cylinder bore (6) has a greater pressure loss than an admission gap between the seat disk (5) and its associated seat, and that an outlet from the throttle gap is nozzleshaped so that the seat of the slide-shaped closing member (4) on the cylinder bore (6) exposed by the partial lift ($H_{4,5}$) can be accurately flooded with cleansing agent and/or disinfectant.

9. Apparatus according to one of Claims 6 to 8, characterized in that the inner valve stem (5a) connected to the seat disk (5) is connected at the end remote from the seat disk to a concentric control cylinder (5d) which has a pressure fluid supply connection (5f) and is open towards the seat disk (5), thus forming a spring compartment (5c), that a control piston (10) having an annular cross-section is located between the control cylinder (5d) and the inner valve stem (5a), said piston having, both on its inner and its outer cylinder wall, revolving inner and outer control piston grooves (10a and 10b respectively) and being pressed into its position of rest by a spring (9) which is indirectly supported by a ring (14) located on the outer, hollow valve stem (4a), that the end of the hollow valve stem (4a) remote from the closing member is provided with a head (4b), in the region of which the inner valve stem (5a) has a revolving valve stem groove (5e), that, located between the operating device (7) and the valve housing (1, 2), there is a hollow connecting housing (8) containing two annular segmental, diametrically arranged connecting housing inserts (11) which concentrically enclose the spring compartment (5c) and the control cylinder (5d), and whereby each of the inner cylinder walls is provided with a first longitudinal groove (11a) running parallel to the longitudinal axis of the valve, that evenly distributed cylinder bores (4d and 5i respectively) are provided, both over the entire circumference of the head (4b) of the hollow valve stem and in the cylinder wall region of the spring compartment (5c) enclosed by the connecting housing insert (11), the axes of said cylinder bores standing at right angles to the longitudinal axis of the valve and grouped in such a way that the axes of each group intersect the longitudinal axis at one point,

that in each cylinder bore (4d or 5i respectively) there is a an inner or outer ball (12 or 13 respectively) of approximately equivalent diameter which is slidably movable slightly in the direction of the bore axis,

that a pin (5k) connected to the outer wall surface of the control cylinder (5d) is movable in the direction of the longitudinal axis of the valve within a second longitudinal groove (11e) formed in the connecting housing insert (11),

that in the closed position of the double seat valve

r)    each of the inner balls (12) is confined, allowing relatively little radial clearance, by the surface of the stem groove (5e), on the one hand, and on the other by the wall, which concentrically encloses the head (4b) of the hollow valve stem, of a cylindrical bore (10c) in the control piston located beneath the inner control piston groove (10b),

g)    each of the outer balls (13) is confined, allowing relatively little radial clearance, by the groove floor (11c) of the first longitudinal groove (11a), on the one hand, and on the other by the control piston wall (10d) enclosed by the spring compartment (5c) and located beneath the outer control piston groove (10a),

that when the double seat valve is in the open position the control piston (10) is moved relative to the control cylinder (5d) in the longitudinal direction of the valve in such a way that

h)    each of the inner balls (12) is confined, allowing relatively little radial clearance, by the cylinder jacket of the valve stem (5a), on the one hand, and on the other by the surface of the inner control piston groove (10b),

i)    each of the outer balls (13) is confined, allowing relatively little radial clearance, by the inner cylinder wall of the appropriate connecting housing insert (11), on the one hand, and on the other by the surface of the outer control piston groove (10a),

and that when the double seat valve is in the cleaning position, the necessary conditions therefor being established by fulfilment of features f) and g) which define the closed position of the double seat valve, the outer balls (13) touch an upper flank surface (11b) of the first longitudinal groove (11a), while, in the closed position of the double seat valve as defined by features f) and g), viewed in the longitudinal direction of the valve, an effective clearance is provided between the outer balls (13) and the upper, sphere-accomodating flank surface (11b) of the first longitudinal groove (11a), corresponding to the partial lift ($H_{4,5}$) of the closing members required for the cleaning position.

10. Apparatus according to one of Claims 6 to 9, characterized in that an annular gap (15) located between the hollow valve stem (4a) and the inner valve stem (5a) and leading to the leakage cavity (3) is connected via openings (4c) in the head (4b) of the hollow stem to a supply connection (14a) for cleansing agent located in the ring (14) arranged beneath the spring compartment (5c) on the head (4b) of the hollow stem.

11. Apparatus according to one of Claims 6 to 10, characterized in that the closed position of both closing members (4, 5) of the double seat valve is indicated by a single position-indicating device (16) which detects the position of a structural part.

12. Apparatus according to Claim 11, characterized in that the closed position of both closing members (4, 5) of the double seat valve is indirectly indicated by a movable structural element and is transmitted to the position indicating device (16), the position of the movable structural element which signals the properly closed position of the double seat valve being unequivocally determined by that position of the hollow valve stem (4a) and of the inner valve stem (5a) which corresponds to the closed position.

13. Apparatus according to one of Claims 6 to 12, characterized in that the control piston (10) is provided as the movable structural element, passing a signal by means of the control piston wall (10d) to the position indicating device (16) when its position of rest corresponds to the properly closed position of the double-seat valve, the position indicating device receiving a path-dependent input signal, preferably via a probe pin (16a), and presenting an electrical output signal in binary digital form via a conductor (16b).

14. Apparatus according to Claim 6, characterized in that the structural parts required for the realization of features d) and e) are assembled within a standardized connected housing (8).

**Revendications**

1. Procédé pour nettoyager simultanément les deux surfaces de siège d'une vanne à double siège sollicitée par un produit au moins d'un côté, notamment en ce qui concerne, lors de son application à l'industrie des produits alimentaires, une vanne à double siège sollicitée d'une manière connue en vue du nettoyage par un agent de nettoyage et/ou un agent de désinfection, cette vanne étant équipée de deux organes d'obturation (4, 5) déplaçables l'un par rapport à l'autre et indépendamment l'un de l'autre de façon à être transférés au moyen de dispositifs d'actionnement de la position de fermeture dans une position d'ouverture, au moins un des organes de fermeture (4, 5), sollicité par le produit, étant agencé en forme de tiroir et étant déplaçable de façon à coulisser avec étanchéité radiale à l'intérieur d'un alésage cylindrique (6) reliant entre elles deux parties (1, 2) du corps de vanne, lesdits organes d'obturation (4, 5) délimitant entre eux, aussi bien dans la position de fermeture que dans la position d'ouverture, une cavité de fuite (3) qui est reliée à l'atmosphère par l'intermédiaire d'un trou ménagé à l'intérieur de la tige (5b), sortant vers le bas du corps de vanne, de l'organe d'obturation inférieur (5), caractérisé en ce que l'organe obturateur (4 ou 5) agencé en forme de tiroir et sollicité par le produit est déplacé, en vue du nettoyage et/ou de la désinfection de son siège, d'une partie de course dans la direction de la partie du corps de vanne (1 ou 2) canalisant le produit et à l'intérieur de l'alésage cylindrique (6), en ce que simultanément l'autre organe obturateur (5 ou 4) est déplacé par rapport à celui sollicité par le produit d'une partie de course orientée dans un sens indentique ou contraire, et en ce que l'agent de nettoyage et/ou de désinfection est amené sur les deux surfaces de siège exposées grâce aux courses partielles exécutées par les organes obturateurs en passant par l'intermédiaire de la partie de corps de vanne (2 ou 1) ne canalisant pas le produit et/ou provenant de l'extérieur de la vanne à double siège par l'intermédiaire de la cavité de fuite (3).

2. Procédé selon la revendication 1, caractérisé en ce que le processus de nettoyage est effectué par exécution de plusieurs courses partielles se répétant.

3. Dispositif pour la mise en oeuvre du procédé selon une des revendications 1 et 2, caractérisé en ce que les deux organes obturateurs (4, 5) sont agencés en forme de tiroir et peuvent être déplacés par translation en sens inverses de courses partielles ($H_4$, $H_5$) par l'intermédiaire de dispositifs d'actionnement indépendants l'un de l'autre.

4. Dispositif pour la mise en oeuvre du procédé selon une des revendications 1 et 2, caractérisé en ce que les organes obturateurs (4, 5) peuvent être déplacés en sens inverses de courses partielles ($H_4$, $H_5$) par l'intermédiaire de dispositifs d'actionnement indépendants l'un de l'autre, en ce que simultanément l'organe obturateur agencé en forme de disque obturateur (4 ou 5) peut être écarté de sa surface de siège d'une course partielle dans le même sens ($H_4$ ou $H_5$) par rapport à l'organe obturateur sollicité par le produit et en ce que l'agent de nettoyage et/ou de désinfection peut être amené sur les deux surfaces de sièges exposées par l'intermédiaire de la partie de corps de vanne (1 ou 2) ne canalisant pas le produit.

5. Dispositif pour la mise en oeuvre du procédé selon une des revendications 1 et 2, caractérisé en ce que les organes obturateurs (4, 5) peuvent être accouplés entre eux et peuvent être déplacés dans le même sens de la course partielle ($H_{4,5}$) par l'intermédiaire d'un dispositif d'actionnement commun, en ce que l'organe obturateur sollicité par le produit (4 ou 5) est agencé en forme de tiroir, en ce que l'autre organe obturateur (5 ou 4) est agencé comme un disque obturateur et en ce que l'agent de nettoyage et/ou de désinfection peut être amené sur les deux surfaces de siège exposées par l'intermédiaire de la partie de corps de vanne (2 ou 1) ne canalisant pas le produit.

6. Dispositif selon la revendication 5, caractérisé en ce que:

a) les tiges (4a, 5a) des deux organes obturateurs (4, 5) s'emboîtent l'une dans l'autre de façon télescopique dans une direction, et

b) elles sortent du corps de vanne (1 ou 2) sur le côté de l'organe obturateur (4) agencé en forme de tiroir,

c) la tige placée à l'intérieur (5a) est reliée au disque obturateur (5) et au dispositif d'actionnement (7),

d) les tiges de soupape (4a, 5a) peuvent être accouplées l'une avec l'autre avec conjugaison de formes ou bien de formes et de forces, dans la zone de leur recouvrement mutuel, à l'aide d'un organe de liaison pouvant être commandé (V) et dont la position peut être contrôlée par l'intermédiaire d'un dispositif de signalisation de position (16), et

e) la course de la tige de soupape placée à l'intérieur (5a), qui est en liaison avec le disque obturateur (5), est limitée à une course partielle ($H_{4,5}$) par l'intermédiaire d'éléments pouvant être commandés (A) et la position de fermeture de l'organe obturateur (4) agencé en forme de tiroir peut être déterminée par une butée (11d).

7. Dispositif selon la revendication 8, caractérisé en ce que l'intervalle utile d'admission de l'agent de nettoyage et/ou de désinfection, qui est produit par la course partielle ($H_{4,5}$) au moyen des éléments commandés (A) entre le disque obturateur (5) et sa surface de siège est soumis à une perte de charge plus grande que l'intervalle utile de décharge créé entre le disque obturateur (5) et l'organe obturateur agencé en forme de tiroir (4).

8. Dispositif selon les revendications 6 et 7, caractérisé en ce qu'un intervalle d'étranglement de forme annulaire qui est créé par le disque obturateur (5) et l'alésage cylindrique (6) présente une plus grande perte de charge qu'un intervalle d'admission créé entre le disque obturateur (5) et sa surface de siège et en ce qu'une sortie de l'intervalle d'étranglement est agencée en forme de buse de telle sorte que la surface de siège, exposée par la course partielle ($H_{4,5}$) sur l'alésage cylindrique (6), de l'organe obturateur (4) agencé en forme de tiroir puisse être balayée de façon correcte par l'agent de nettoyage et/ou de désinfection.

9. Dispositif selon une des revendications 6 à 8, caractérisé en ce que la tige intérieure de vanne (5a) reliée au disque obturateur (5) est raccordée par son extrémité opposée au disque obturateur avec un cylindre de commande concentrique (5d), qui comporte un raccord de passage de fluide sous pression (5f) et qui est ouvert en direction du disque obturateur (5), de manière à former une chambre à ressort (5c), en ce qu'il est prévu entre le cylindre de commande (5d) et la tige intérieure de vanne (5a) un piston de commande (10) de section de forme annulaire, qui comporte aussi bien sur sa surface cylindrique intérieure que sur sa surface cylindrique extérieure une rainure périphérique intérieure ou extérieure (10a ou 10b) et qui est poussé dans sa position de repos à l'aide d'un ressort (9) s'appuyant indirectement sur lui par l'intermédiaire d'un anneau (14) disposé sur la tige creuse extérieure de vanne (4a), en ce que la tige creuse de vanne (4a) est pourvue à son extrémité opposée à l'organe obturateur d'une tête (4b) dans la zone de laquelle la tige intérieure de vanne (5a) comporte une rainure périphérique (5e), en ce qu'il est prévu entre le dispositif d'actionnement (7) et le corps de vanne (1, 2) un carter de liaison creux (8) dans lequel sont disposés deux appendices (1) placés diamétralement et entourant concentriquement la chambre à ressort (5c) et le cylindre de commande (5d) et qui sont pourvus dans leur surface cylindrique intérieure respectivement d'une première rainure longitudinale (11a) orientée parallèlement à l'axe longitudinal de la vanne, en ce qu'il est prévu aussi bien sur toute la périphérie de la tête de tige creuse (4b) que dans la zone de surface cylindrique de la chambre à ressort (5c) entourée par l'appendice de carter de liaison (11) des orifices cylindriques (4d, 5i) répartis uniformément et dont les axes sont orientés perpendiculairement à l'axe longitudinal de la vanne et se coupent respectivement de façon groupée en un point, en ce qu'il est prévu dans chaque orifice cylindrique (4d ou 5i) une bille intérieure ou une bille extérieure (12 ou 13) approximativement de même diamètre et qui est légèrement déplaçable dans la direction de l'axe de trou, en ce qu'un têton (5k) relié à la surface périphérique extérieure du cylindre de commande (5d) peut coulisser dans une seconde rainure longitudinale (11e) ménagée dans l'appendice de carter de liaison (11), en ce que dans la position de fermeture de la vanne à double siège:

f)    les billes intérieures (12) sont respectivement maintenues avec un léger jeu radial d'une part par la surface de la rainure de tige (5e) et d'autre part par la paroi, entourant concentriquement la tête de tige creuse (4b), d'un trou cylindrique (10c) ménagé dans le piston de commande, qui se trouve en dessous de la rainure intérieure du piston de commande,

g)    les billes extérieures (13) sont respectivement maintenues avec un jeu radial relativement faible d'une part par le fond (11c) de la première rainure longitudinale (11a) et d'autre part par la surface périphérique (10d) du piston de commande, qui est entourée par la chambre à ressort (5c) et qui se trouve en dessous de la rainure extérieure de piston de commande (10a),

en ce que dans la position d'ouverture de la vanne à double siège, le piston de commande (10) est déplacé par rapport au cylindre de commande (5d) dans la direction longitudinale de la vanne de telle sorte que:

h)    les billes intérieures (12) soient respectivement maintenues avec un jeu radial relativement faible d'une part par la surface cylindrique de la tige de vanne (5a) et d'autre part par la surface de la rainure intérieure de piston de commande (10b),

i)    les billes extérieures (13) soient respectivement maintenues avec un jeu radial relativement faible par la surface cylindrique intérieure de l'appendice correspondant (11) du carter de liaison et d'autre part par la surface de la rainure extérieure de piston de commande (10a),

et en ce que dans la position de nettoyage de la vanne à double siège, dont les conditions nécessaires sont établies par observation des caractéristiques f) et g) définissant la position de fermeture de la vanne à double siège, les billes extérieures (13) sont en contact avec une surface supérieure de flanc (11b) de la première rainure longitudinale (11a) alors que, dans la position de fermeture de la vanne à double siège définie par les caractéristiques f) et g), il existe dans la direction longitudinale de la vanne entre les billes extérieures (13) et la surface supérieure de flanc (11b), adaptée à la forme des billes, de la première rainure longitudinale (11a), un espacement utile qui correspond à la course partielle ($H_{4, 5}$) nécessaire pour la position de nettoyage, des organes obturateurs (4, 5).

10. Dispositif selon une des revendications 6 à 9, caractérisé en ce qu'un intervalle annulaire (15) débouchant dans la cavité de fuite (3) et établi entre la tige creuse de vanne (4a) et la tige intérieure de vanne (5a), est relié par l'intermédiaire d'orifices de passage (4c) ménagés dans la tête de tige creuse (4b) avec un raccord de passage d'agent de nettoyage (14a), qui est situé dans un anneau (14) disposé sur la tête de tige creuse (4b) en dessous de la chambre à ressort (5c).

11. Dispositif selon une des revendications 6 à 10, caractérisé en ce que la position de fermeture des deux organes obturateurs (4, 5) de la vanne à double siège est signalée par un seul dispositif de signalisation de position (16) détectant la position d'un composant.

12. Dispositif selon la revendication 11, caractérisé en ce que la position de fermeture des deux organes obturateurs (4, 5) de la vanne à double siège est signalée indirectement par l'intermédiaire d'un composant mobile et est transmise au dispositif de signalisation de position (16), la position du composant mobile signalant la condition correcte de fermeture de la vanne à double siège étant déterminée de façon nette par la position, correspondant à la position de fermeture, aussi bien de la tige creuse de vanne (4a) que de la tige intérieure de vanne (5a).

13. Dispositif selon une des revendications 6 à 12, caractérisé en ce qu'il est prévu comme composant mobile le piston de commande (10) qui, dans sa position de repos correspondant à la position correcte de fermeture de la vanne à double siège, assure au moyen de sa périphérie (10d) l'activation du dispositif de signalisation de position (16), qui reçoit de préférence par l'intermédiaire d'un têton de palpage (16a) un signal d'entrée fonction de la course et qui transmet par l'intermédiaire d'un conducteur (16d) un signal électrique de sortie de nature numérique binaire.

14. Dispositif selon la revendication 8, caractérisé en ce que les composants nécessaires pour la réalisation des caractéristiques d) et e) sont logés ensemble dans un carter de liaison normalisé (6).

Fig. 1    Fig. 1a    Fig 1b    Fig. 2    Fig. 2a    Fig. 3    Fig. 3a

Fig. 4    Fig. 4a    Fig. 6    Fig. 5a

0 044 517

Fig. 6

Fig. 7

Fig. 8

0 044 517

Fig. 7a (Schnitt A-B)

Fig. 8a (Schnitt C-D)

21

# Fig. 9

# Fig. 10

*Fig.11*

*Fig.12a*

*Fig.12b (Schnitt E-F)*

25